# EUROPEAN PATENT APPLICATION

(11) **EP 1 582 527 A1**
(43) Date of publication of application: **05.10.2005**
(21) Application number: 04101318.6
(22) Date of filing: 31.03.2004
(51) Int. Cl.: C07F 9/6568, C07F 9/32, C07F 9/50, C07B 53/00, B01J 31/24

(54) **Synthesis of phosphorus based ligands**

(71) Applicant: Ciba Specialty Chemicals Holding Inc., 4057 Basel (CH)
(72) Inventor: Berens, Ulrich, 79589 Binzen (DE)

(57) **Abstract**

Chiral ligands of the formula I or II, 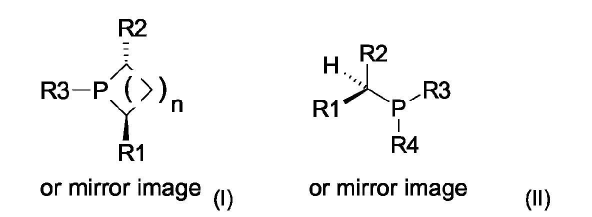 may be obtained in high enantiomeric purity from compounds of the formulae III or IV, respectively, 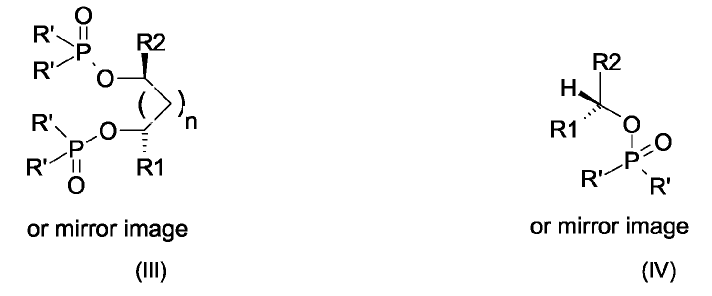 with suitable phosphines, where the symbols R₁, R, n, R₃, R₄, R' are as described in claim 1. The products may be converted into transition metal complexes which are useful as catalysts for asymmetric hydrogenation reactions.

## Description

### FIELD OF THE INVENTION

The present invention relates to a method for the preparation of chiral phosphorus based ligands; new chiral reagents for this purpose; and their use in the synthesis of chiral ligands. Cationic or neutral complexes of said ligands with transition metals such as Rhodium, Ruthenium, or Iridium are useful as catalysts for the asymmetric hydrogenation of C=C, C=O or C=N double-bonds.

### BACKGROUND OF THE INVENTION

The synthesis of chiral phosphine ligands such as DIOP 1, phosphetanes 4 (n=1), or phospholanes 4 (n=2) involve the single or double alkylation of a phosphide anion with a suitable alkylating agent such as **3** or **7**. 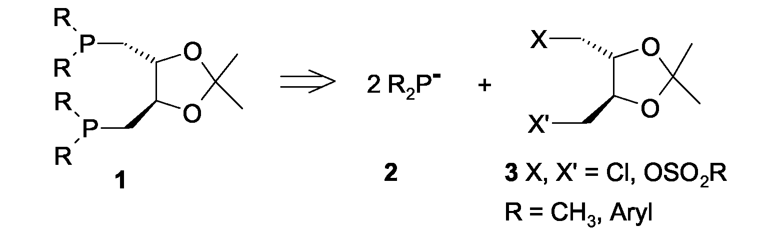 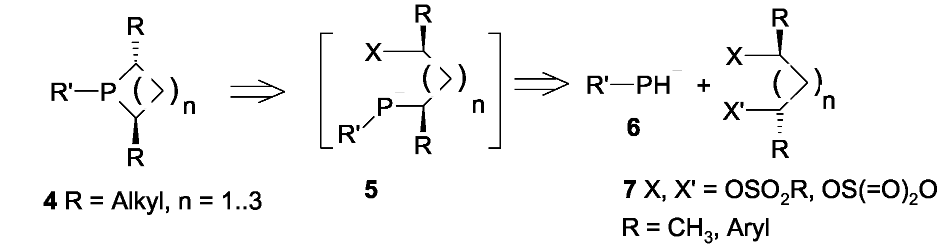 The generation of a phosphanide anion such as **2** requir es strongly basic conditions, because the acidity of phosphines is low. Typically, bases such as n-butyllithium, s-butyllithium or lithium dialkylamides are required to de-protonate the phosphine. Under these conditions, significant decomposition of the alkylating agent by elimination reactions is an important and undesirable side reaction, which can result in a dramatic decrease of ligand yield. Depending on the strength of the leaving group, this side reaction can become more important or even the predominant reaction. For example, in the alkylation of a di-aryl phosphines **2** (R = Aryl) to give analogues of DIOP **1,** the use of alkylating agent **3** with the relatively weak chloride leaving group gives the product in higher yield and much cleaner compared to using alkylating reagents **3** with strong sulfonate leaving groups such as tosylate or mesylate *(J. Org. Chem.* **1980,** *45*, 2995 and *J. Organomet. Chem.* **1989,** *363*, 377). For the alkylation of the more basic and sterically considerably hindered dicyclohexyl phosphine **2** (R=Cy) by far the best reagent is **3** with the very weak fluoride as leaving group *(J. Organomet. Chem. **1989,** 370,* 203)*.*
Although chlorides or fluorides are very useful alkylating reagents for the synthesis of phosphines via alkylation of phosphides, problems arise when the leaving group is attached to a stereogenic carbon, which for example is present in **7**. This is due to the difficulty to obtain such chiral alkyl halides in enantiopure form or at least with high optical purity, whereas leaving groups such as alkyl- or arylsulfonate esters are readily accessible with high optical purity but are prone to the aforementioned side reactions.

A slightly different situation is encountered, when for the synthesis of phosphetane- **4** (n=1, R=lower alkyl) or phospholane-ligands **4** (n=2, R=lower alkyl) a primary phosphine needs to be alkylated twice. Here, the preferred alkylating agents are cyclic sulfates **7** (X-X' = O-S(O)₂-O-), which behave like two stage alkylating agents. In the first stage, the principal alkylating agent is a highly reactive ester of sulphuric acid, which alkylates phosphide **6,** which is derived from a primary phosphine. In the second stage, the previously formed, more basic secondary phosphide **5** is alkylated with a sulphuric acid hemi-ester salt. Due to its negative charge this behaves like a much weaker alkylating agent, and decomposition of the alkylating reagent by elimination reactions is reduced significantly.

However, aliphatic cyclic sulfates display only a low thermal stability. In DSC experiments the cyclic sulfate derived from (2*S*,5*S*)-hexanediol **7** (n=2, R=Me, X-X' = O-S(O)₂-O-) displays a *very exothermic* decomposition with an onset temperature of ca. 150°C. Also, aliphatic cyclic sulfates decompose within days on standing at ambient temperature, and despite their considerable synthetic utility only very few are commercially available. Cyclic sulfates derived from benzylic alcohols would be highly interesting precursors for the synthesis of ligands such as **4** (n=1..3, R=Aryl), but have so far been elusive. Thus, the synthesis of an an excellent ligand of type **4** (n=2, R=Ph) had to be performed through by an entirely different and rather limited route. *(Org. Lett.* **2003,** *5*, 1273).
Likewise, the analogous benzylic sulfonyl esters from benzylic alcohols **7** (R=aryl, X,X' = OS(O)₂R) are extremely labile. For example, the di-mesylate derived from enantiopure 1,3-diphenylpropandiol-1,3 is stable only at low temperature and has been reported to decompose at 62-63°C *(Tetrahedron: Asymmetry* **2003,** *14*, 2739).

The low thermal stability of aliphatic cyclic sulfates or benzylic sulfonyl esters is related to the good leaving group properties of these functional groups. Consequently, cyclic sulfites such as **6** are far more stable and may be distilled without problems. However, these compounds can not replace cyclic sulfates of sulfonate esters as alkylating agents in the synthesis of phosphine ligands, and attempting to alkylate phosphides with these compounds gave only a mixture of products.
Esters of carboxylic acids such as **7a-c** turned out to be thermally very stable. However, on the attempted syntheses of phosphine ligands using these esters as alkylating agents, no P,C-bonds were formed, presumably as carboxylates are too weak as to be useful leaving groups for the alkylation of phosphides.

### SUMMARY OF THE INVENTION

Phosphinic acid esters of aliphatic **8** and of benzylic alcohols were found to be thermally by far more stable than the analogous sulfate or sulfonate esters. In DSC experiments esters of diphenylphosphinic acid underwent very surprisingly an *endothermal* decomposition reaction with an onset of ca. 250°C for phosphinic esters of type **8a**, which are derived from aliphatic alcohols. Even for phosphinic esters **8b**, which were derived from benzylic alcohols, the onset temperature for an *endothermic* decomposition was still ca. 190°C.

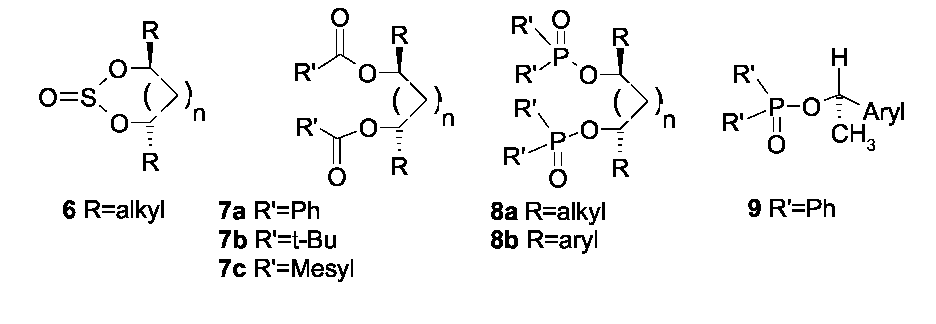

Although the high onset temperatures for decomposition of diphenylphosphinic esters indicate that diphenylphosphinate must be a poor leaving group, quite surprisingly these esters are capable to alkylate phosphanides in a very clean reaction. Even more surprisingly, with diphenylphosphinic ester **9** it was possible to alkylate lithium diphenylphosphide to give **10** in 70% yield. When **9** with an enantiomeric excess of 92% was used and the formed product was oxidised to the phosphine oxide, the ee of the latter was still 87.85%. This indicates that a nucleophilic displacement in a *benzylic* position with 95% optical yield had taken place.

Thus, present invention pertains to a process for the preparation of a ligand of the formula I or II, 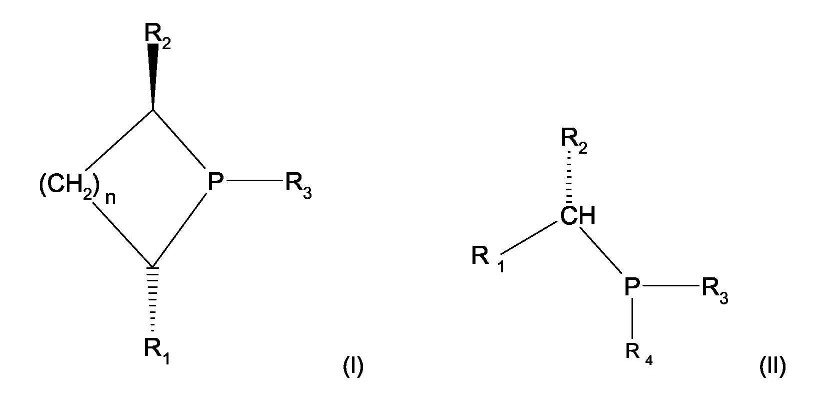 in high enantiomeric purity,
said process comprising reacting a compound of the formula III of high enantiopurity 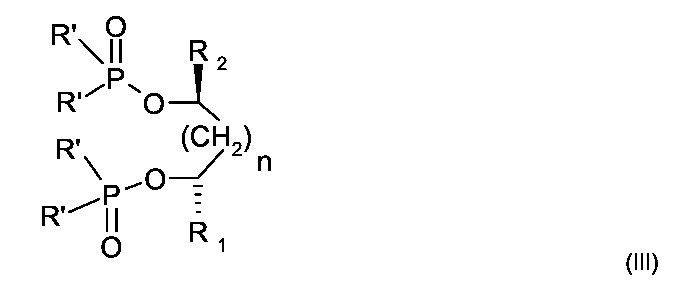 with a phosphine of the formula V

R₃-PH₂ (V)

for the synthesis of a compound of the formula I;
or reacting a compound of the formula IV of high enantiopurity 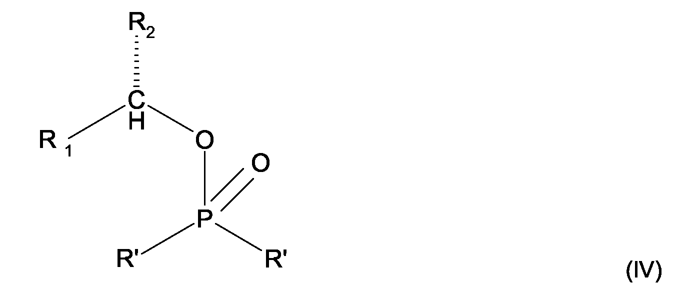 with a phosphine of the formula VI

R₃-PH-R₄ (VI)

for the synthesis of a compound of the formula II,
where
R₁ and R₂ independently are alkyl or aryl, especially C₁-C₄alkyl or phenyl;
n ranges from 1 to 5, especially from 1 to 3;
R₃, R₄, R' independently are monovalent organic moieties that can be bound to phosphorus, preferably selected from aryl, alkyl, alkenyl, substituted aryl such as C₁-C₄alkyl and/or heteroatom-substituted aryl especially with heteroatom substituent in *ortho* position; especially phenyl, correspondingly substituted phenyl, or alkyl such as C₁-C₄alkyl.

Heteroatom substituents useful are mostly groups containing P, N, O, S known in the art, or substituents which are transformed in the course of the present process undergoing the same reaction, especially for bidentate ligands. Examples for such heteroatom substituents, especially those attached in ortho position to the aryl, preferably phenyl, include:
unsubstituted or 2-mono- or 2,5-disubstituted 1-pyrrolidinyl;
arylalkoxy such as phenyl-C₁-C₄alkoxy or benzyloxy;
or residues of the formula I' or II' 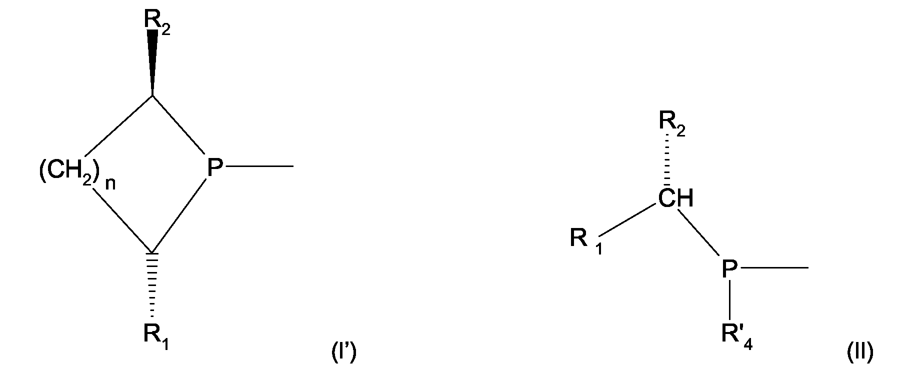
where R₁ and R₂ independently are as defined above and R'₄ is an organic residue preferably selected from aryl, alkyl, alkenyl, substituted aryl such as C₁-C₄alkyl aryl; especially phenyl or C₁-C₄alkylphenyl, or alkyl such as C₁-C₄alkyl;
or corresponding residues wherein a group of the formula I' or II' is linked to a suitable bridging group.
Substituents of these or analogous classes are described, *inter alia,* in *J. Org. Chem. **2003** 68*, 3258-3270, *Angew. Chem. Int. Ed.* **1998,** *37*, 3116, or *J. Am. Chem. Soc.* **1999,** *121*, 9899.

Examples of products of the formula I belonging to these classes include compounds of the following formulae: 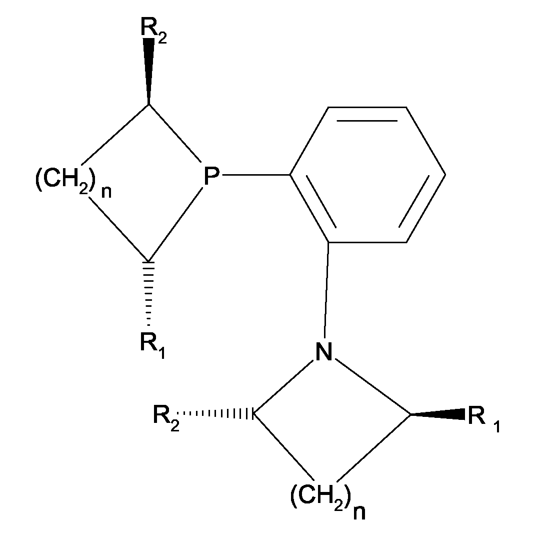 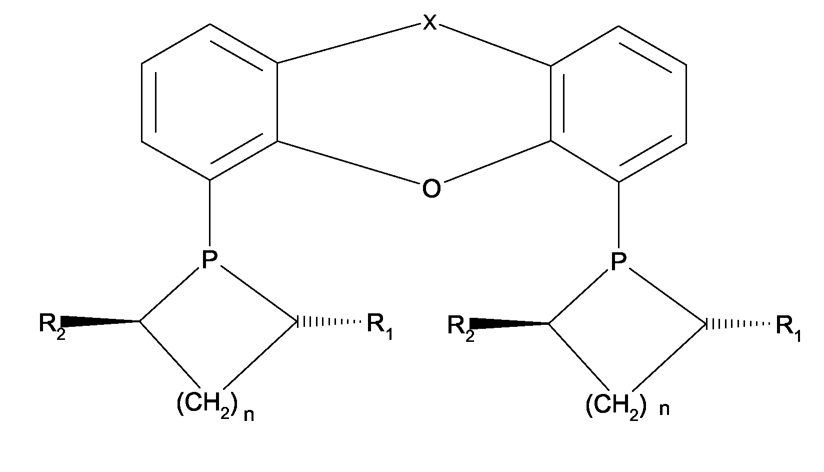 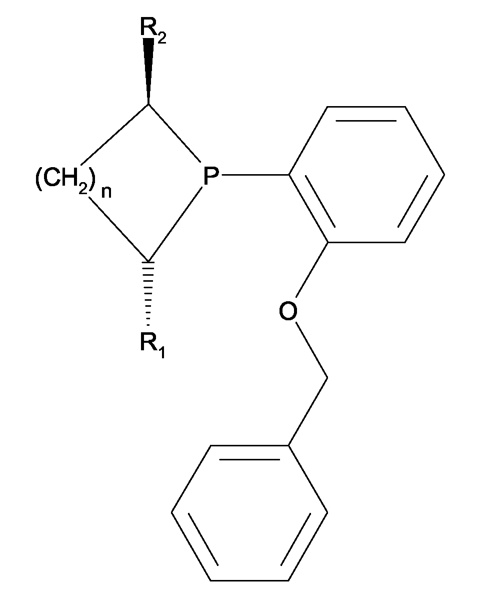 where X is CH₂, CHCH₃, C(CH₃)₂, S, O, or substituted nitrogen, and R₁, R₂ and n are as defined above.

In the above formulae, asymmetric centres are indicated by dotted 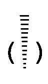 or arrow type bonds 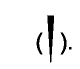 These formulae do not necessarily indicate the absolute symmetry. Instead, the present process may advantageously be carried out also using the other enantiomer, i.e. the compound wherein the centre of asymmetry, or both centres of asymmetry if present, are inverted (mirror image formula). Further, in compounds of the formula I and III, the residues R₁ and R₂ generally stand in position trans to each other.

Usually, the process of the invention is able to retain the enantiomeric purity of the educt to a high degree; typically, the enantiomeric yield in the present process is 90 % or higher, especially 95 % or higher.

High enantiomeric purity is preferably an ee of 90 to 100%, especially 95 to 100%. Highly preferred is an ee of 98 to 100%, especially 99 to 100%. An enantiomerically pure form is most preferred. Educts of formulae III and IV, and products of formulae I and II of the instant process usually are of enantiomeric purity of at least 90 %, especially 98 % or more.

Chiral reagents of present formulae III or IV may conveniently be prepared from the corresponding chiral alcohol and a suitable phosphinic acid derivative, for example the halogenide. This reaction is carried out in analogy to methods known in the art, usually in presence of a base (e.g. a tertiary amine such as pyridine or triethylamine, or a base which is suitable to convert the acohol into the corresponding alkalimetal alcoholate, e.g. sodium or potassium hydride or an alkyl lithium such as n-BuLi and the like). Thus, the reagents of the formula III or IV may be prepared from the corresponding chiral mono- or dialcohol and a compound of the formula X

(R')₂-P(=O)-Hal (X),

in the presence of a suitable base,
wherein Hal stands for halogen and R' is as defined for formulae III or IV.

In a preferred process, R₃ and R₄ are equal, and the residues R' bonding to the same phosphorus atom are equal and preferably are phenyl or form part of a P-containing ring, especially a five membered ring usually being carbocyclic except for the phosphorus atom.

In formulae I and III, R₁ and R₂ are preferably lower alkyl or phenyl, and also preferably R1 is equal to R₂.

In formulae II and IV, R₁ is preferably alkyl, more preferably C₁-C₄alkyl, and R₂ as alkyl or aryl preferably is C₁-C₄alkyl or phenyl.

n is most preferably 2.

The process of present invention is preferably carried out in the presence of a base.

Present invention also pertains to the use of a phosphinic acid ester derived from a chiral alcohol of high enantiopurity as thermally stable alkylating reagent.

Some of the above compounds of formulae I-IV are novel. Thus, present invention further pertains to a ligand of the formula I or II, or a reagent of the formula III or IV, wherein R₂ is aryl, preferably wherein each R' and R₂ are phenyl.

As noted above, compounds of present formulae I or II may be used as complexing agents e.g. for transition metals. The resulting complexes are useful as catalysts, inter alia for asymmetric hydrogenation reactions. Preferred transition metals include Rh, Ru, Ir. Therefore, a transition metal complex comprising a ligand of the formula I or II is a further object of the invention. Consequently, present invention also pertains to the use of a phosphorus containing ligand of formula I or II, or of a corresponding transition metal complex, in an asymmetric reaction or as an asymmetric catalyst, preferably in hydrogenation.

Present invention provides a solution to produce enantiomerically pure ligands, from thermally stable alkylating agents which undergo clean S_{N}2 substitution in aliphatic and especially in benzylic positions. The requirement of an ee-upgrading procedure thereby usually can be avoided; however, further steps for improving the enantiomeric purity may be added if desired.

In "unsubstituted or substituted", "substituted", whereever used for a moiety, means that one or more hydrogen atoms in the respective molecule, especially up to 5, more especially up to three, of the hydrogen atoms are replaced by the corresponding number of substituents which preferably are independently selected from the group consisting of alkyl, especially lower alkyl, for example methyl, ethyl or propyl, fluoro, fluoro-lower alkyl, for example trifluoromethyl, C₆-C₁₆-aryl, especially phenyl or naphthyl (where C₆-C₁₆-aryl, especially phenyl or napthyl, is unsubstituted or substituted by one or more, especially up to three moieties selected from lower alkoxy, N,N-di-lower alkylamino, N-phenyl-lower alkylamino, N,N-bis(phenyl-lower alkyl)-amino, and fluoro-lower alkyl, e.g. trifluoromethyl), C₃-C₁₀-cycloalkyl, lower alkoxy, for example methoxy, phenyl-lower alkoxy, N,N-di-lower alkylamino, N-phenyl-lower alkylamino, N,N-bis(phenyl-lower alkyl)-amino and di-lower alkylamino. It goes without saying that substitutents are only at positions where they are chemically possible, the person skilled in the art being able to decide (either experimentally or theoretically) without inappropriate effort which substitutions are possible and which are not.

Aryl (also in arylene) preferably has a ring system of not more than 24 carbon atoms, especially not more than 16 carbon atoms, is preferably mono-, bi- or tric-cyclic, and is unsubstituted or substituted preferably as defined above under "Substituted"; for example, aryl is selected from phenyl, naphthyl, indenyl, azulenyl and anthryl, and is preferably in each case unsubstituted or substituted phenyl or (especially 1- or 2-) naphthyl. Unsubstituted aryl is preferred. Unsubstituted aryl, preferably phenyl, is especially preferred as organic moiety. Aryl as ring A is also ferrocenyl which is one preferred aromatic moiety as ring A in any of the formulae carrying such a ring throughout this application and where the phenyl rings that form part of the ferrocenyl moiety are, in addition to the two bonds extending from the double bond in ring A in formulae IVA, IVB, IVA*, IVB*, IA, IB, IIA, IIB, IIIA, IIIB, VA, VB, VA*, VB*, VIIIA, VIIIB, XA, XB, XA*, XB*, XIIA, XIIB, XIIA*, XIIB*, XIVA and/or XIVB, unsubstituted or substituted, preferably by substituents as described above under "substituted", where preferably the phenyl ring from which the two bonds from ring A extend carries four hydrogen atoms, while the other ring that forms part of the ferrocenyl moiety is identical (including the substituents on the two bonds extending from the double bond shown in the mentioned formulae) or is phenyl that is unsubstituted or substituted by lower alkyl, such as methyl, ethyl and/or isopropyl.

A mono-, di- or polycyclic heteroaromatic ring A is preferably unsubstituted or substituted heteroarylene with heteroaryl as defined below (with the two bonds to the rest of the molecule, that is, extending from the double bond forming part of ring A, bound at vicinal C-atoms).

Heteroaryl is preferably a heterocyclic moiety that is unsaturated in the bonding ring and is preferably a monocyclic or in a broader aspect of the invention bicyclic or tricyclic ring; has 3 to 24, more preferably 4 to 16 ring atoms; wherein at least in the ring bonding to the radical of the molecule of formula I one or more, preferably one to four, especially one or two carbon ring atoms are replaced by a heteroatom selected from the group consisting of nitrogen, oxygen and sulfur, the bonding ring preferably having 4 to 12, especially 5 to 7 ring atoms; heteroaryl being unsubstituted or substituted by one or more, especially 1 to 3, substitutents independently selected from the group consisting of the substituents defined above under "Substituted"; especially being a heteroaryl radical selected from the group consisting of imidazolyl, thienyl, furyl, pyranyl, thiopyranyl, benzofuranyl, benzimidazolyl, pyrazolyl, thiazolyl, oxazolyl, pyridyl, pyrazinyl, pyrimidinyl, isoindolyl, indolyl, indazolyl, triazolyl, isoquinolyl, quinolyl, tetrahydroquinolyl, tetrahydroisoquinolyl, dibenzofuranyl, benzothiophenyl, dibenzothiophenyl, naphthyridinyl, quinoxalyl, quinazolinyl, carbazolyl, β-carbolinyl, phenanthridinyl, acridinyl, perimidinyl, phenanthrolinyl, furazanyl, phenazinyl, phenothiazinyl and phenoxazinyl, each of these radicals being unsubstituted or substituted by one to two radicals selected from the group consisting of fluoro, lower alkyl, especially methyl or tert-butyl, and lower alkoxy, especially methoxy.

An organic moiety R₁ or R₂ is preferably a moiety that comprises 1 to 50 carbon atoms, that may saturated, unsaturated or partially saturated, wherein carbon atoms may be replaced with heteroatoms, especially selected from N, O, S, Se or P, with the proviso that the moiety is chemically stable. The organic residue may in addition be substituted, or unsubstituted, preferably as described above.

Preferably, such an organic moiety is selected from the group consisting of an unsubstituted or substituted moiety selected from the group consisting of aryl, heterocyclyl, cycloalkyl, aryl-lower alkyl, heterocyclyl-lower alkyl, cycloalkyl-lower alkyl and alkyl.

Aryl preferably is as described above.

Heterocyclyl is preferably a heterocyclic radical that is unsaturated, saturated or partially saturated in the bonding ring and is preferably a monocyclic or in a broader aspect of the invention bicyclic or tricyclic ring; has 3 to 24, more preferably 4 to 16 ring atoms; wherein at least in the ring bonding to the radical of the molecule of formula I one or more, preferably one to four, especially one or two carbon ring atoms are replaced by a heteroatom selected from the group consisting of nitrogen, oxygen and sulfur, the bonding ring preferably having 4 to 12, especially 5 to 7 ring atoms; heteroaryl being unsubstituted or substituted by one or more, especially 1 to 3, substitutents independently selected from the group consisting of the substituents defined above under "Substituted"; especially being a heteroaryl radical selected from the group consisting of imidazolyl, thienyl, furyl, pyranyl, thiopyranyl, benzofuranyl, pyrrolinyl, pyrrolidinyl, imidazolidinyl, benzimidazolyl, pyrazolyl, pyrazinyl, pyrazolidinyl, thiazolyl, oxazolyl, pyridyl, pyrazinyl, pyrimidinyl, piperidyl, piperazinyl, pyridazinyl, morpholinyl, thiomorpholinyl, indolizinyl, isoindolyl, indolyl, benzimidazolyl, indazolyl, triazolyl, isoquinolyl, quinolyl, tetrahydroquinolyl, tetrahydroisoquinolyl, benzofuranyl, dibenzofuranyl, benzothiophenyl, dibenzothiophenyl, naphthyridinyl, quinoxalyl, quinazolinyl, carbazolyl, β-carbolinyl, phenanthridinyl, acridinyl, perimidinyl, phenanthrolinyl, furazanyl, phenazinyl, phenothiazinyl and phenoxazinyl, each of these radicals being unsubstituted or substituted by one to two radicals selected from the group consisting of lower alkyl, especially methyl or tert-butyl, and lower alkoxy, especially methoxy.

Cycloalkyl is preferably C₃-C₁₀-cycloalkyl, especially cyclopropyl, dimethylcyclopropyl, cyclobutyl, cyclopentyl, cyclohexyl or cycloheptyl, cycloalkyl being unsubstituted or substituted by one or more, especially 1 to 3, substitutents independently selected from the group consisting of the substituents defined above under "Substituted".

Aryl-lower alkyl is preferably lower alkyl that is substituted (preferably terminally or in 1-position) by unsubstituted or substituted aryl as defined above, especially phenyl-lower alkyl, such as benzyl.

Heterocyclyl-lower alkyl is preferably lower alkyl that is substituted (preferably terminally) by unsubstituted or substituted heterocyclyl as defined above.

Cycloalkyl-lower alkyl is preferably lower alkyl that is substituted (preferably terminally) by unsubstituted or substituted cycloalkyl as defined above.

Alkyl preferably has up to 20, more preferably up to 12 carbon atoms and is linear or branched one or more times; preferred is lower alkyl, especially C₁-C₄-alkyl.

Substituted alkyl is especially aryl-lower alkyl, heterocyclyl-lower alkyl or cycloalkyl-lower alkyl, wherein aryl- heterocyclyl or cycloalkyl are unsubstituted or substituted by one or more, preferably up to 4, subsituents independently selected from the substituents defined generally above.

Halogen is preferably fluoro, chloro, bromo or iodo, more preferably chloro, bromo or iodo.

An organic residue capable of binding to phosphorus preferably is any moiety that comprises 1 to 50 carbon atoms, that may saturated, unsaturated or partially saturated, wherein carbon atoms may be replaced with heteroatoms, especially selected from N, O, S, Se or P, with the proviso that the moiety is chemically stable. The organic residue may in addition be substituted, or unsubstituted, preferably as described above. In the case of R₃, "monovalent" means that the moiety is bound via one bond to the rest of the molecule (one hydrogen is replaced with this bond), preferably in a manner so that 5 to 7-membered cyclic phosphorus-metal complexes are formed.

Preferably, an organic residue capable of binding to phosphorus is selected from the group consisting of an unsubstituted or substituted moiety selected from the group consisting of aryl, heterocyclyl, cycloalkyl, aryl-lower alkyl, heterocyclyl-lower alkyl, cycloalkyl-lower alkyl, alkyl, aryloxy, heterocyclyloxy, cycloalkyloxy, aryl-lower alkyloxy, heterocyclyl-lower alkyloxy, cycloalkyl-lower alkyloxy and alkoxy, with the more general moieties mentioned preferably being defined as above.

Useful bases in the present process include lithium organic compounds or alkaline alcoholates, preferably an alkyl-lithium or lithium amide, especially a lower alkyllithium, preferably n-butyllithium or hexyllithium, or in a broader aspect sec- or tert-butyllithium, or aryllithium, such as phenyllithium, or lower dialkyllithium amide such as Li diethylamide and Li diisopropylamide. Useful alcoholates are, for example, sodium or potassium C₁-C₄alcoholates such as potassium tert.-butylate.

The reaction preferably takes place in an inert solvent, usually an aprotic one of suitable polarity such as an ether, especially a di-lower alkylether, such as diethylether, or a cyclic ether, such as tetrahydrofurane, or a suitable aromatic solvent such as toluene, at preferred temperatures between -10 and 80 °C, especially between 0 and 60 °C, more preferably between 0 and 30 °C, preferably under exclusion of oxygen, e.g. by using inert gas such as argon or nitrogen, and under anhydrous conditions, e.g. using the Schlenk technology and equipment, or other methods known in the art.

Complexes with transition metals of compounds of the formula I and/or II are preferably those of these ligands together with transition metals, especially of groups 3 to 12 of the periodic table of elements, including the lanthanides and actinides, especially of groups 4 to 12, most especially with rhodium, ruthenium, palladium, platinum, iridium, nickel or cobalt, most preferably with rhodium or ruthenium or iridium.

Free ligand positions may in addition be occupied by further ligands, and/or counterions may be present, depending on the charge of the resulting complex, e.g. BF₄^{―} , PF₆^{―} , SbF₅^{―} or CF₃SO₃^{―} , or lower alkanoates, such as acetate^{―}.

For the manufacture of the complex, for example the complex constituted from the selected transition metal and the original ligand to be replaced is dissolved in a suitable solvent, e.g. an ether, such as a cyclic ether, preferably tetrahydrofurane, a halogenated hydrocarbon, such as a chlorinated lower alkane, e.g. chloroform or dichloromethane, an alcohol, such as methanol or ethanol, an aromatic hydrocarbon, such a toluene or xylene, or an N,N-di-(lower alkyl)-lower alkanoylamide, such as dimethylformamide; if required, in the presence of a further anionic ligand able to coordinate to remaining free coordination positions, and the chiral ligand is added, either in the solid state or already dissolved in a suitable solvent. The progress of the reaction may, inter alia, be followed by detection of colour changes, precipitation of the product, NMR, GC, TLC or the like. At the end of the reaction, the solvent is removed and the chiral complex formed may be used as it is or it may be subjected to further standard purification steps known in the art in order to obtain a purified complex. Preferably, the complex formation takes place shortly or immediately before the use of the complex in organic synthesis, e.g. hydrogenation.

All reactions described hereinbefore and hereinafter are preferably, where required, mandatorily, carried out under inert gas, e.g. argon or nitrogen and (where required or desirable) under water-free conditions, e.g. using the Schlenk technology and equipment and anhydrous (especially absolute) reagents and solvents.

The invention relates also to any novel single reaction step that forms part of the synthesis of compounds of the formula I and/or II, as well as of those of formula I and/or II, as well as of those of the formula III and/or IV, as well as to any novel intermediate formed during these synthesis steps.

Very preferred embodiments of the invention are mentioned in the following examples and claims. Also preferred are metal complexes comprising the ligand groups or ligands mentioned in the examples.

### EXAMPLES

The following examples illustrate the invention without limiting the scope thereof.

### Abbreviations:

| | |
|---|---|
| n-BuLi | n-butyllithium |
| NMR | Nuclear Magnetic Resonance |
| THF | tetrahydrofuran |
| Ph | phenyl |

### Example 1 (2 R,5R)-hexanediol-bis(diphenylphosphinic) acid ester:

A solution of (2*R*,5*R*)-hexanediol-2,5 (5.0g, 42.3 mmol) in pyridine (13.6 ml, 170 mmol) was cooled to 0°C. Then diphenylphosphinic acid chloride (13.4g, 93.1 mmol) was added dropwise within 10 minutes. The slightly turbid mixture was then stirred over night (16h), and turned over this time into a viscous mass. To this mass was added water (1 ml), and stirring was continued for another hour. The mixture was then acidified with 2 N HCl (40 ml), and extracted thrice with ethyl acetate (50 ml each time). The combined organic layers were dried (sodium sulfate), and removal of the solvent gave a viscous oil (19.5g), which was crystallised from ethyl acetate/hexane to give the product (12.3g, 53%) as colourless crystals, mp=117°C.

### Example 2: 2,3-bis((2S,5S)-2,5-dimethyl-phospholan-1-yl)-benzo[b]thiophene

In a Schlenk flask a solution of lithium diethylamide in toluene was prepared at -20°C under argon from a solution of diethylamine (0.438 g, 6 mmol) in toluene (10 mL) and *n*-BuLi (3.8 ml 1.6 N solution in hexanes, 6 mmol). Another Schlenk flask was charged with oxygen free toluene (20 ml) and 2,3-bis(phosphino)benzothiophene (0.198g, 1 mmol). To this solution was added the freshly prepared solution of LiNEt₂ until a yellow color persisted (ca. 0.3 ml, removal of protic species), and then another 4.7 ml of the same LiNEt₂ solution (approximately 2 mmol). To this mixture was then added at ambient temperature a solution of (2*R*,5*R*)-hexanediol-bis(diphenylphosphinic) acid ester (1.037 g, 2.0 mmol) in 10 mL of oxygen free toluene, and the mixture was stirred for one hour, before the rest of the LiNEt₂-solution (ca. 9 ml, ca. 4 mmol) was added dropwise within 15 minutes. During this addition the colour changed to a deep brownish red. The mixture was kept stirring at 40°C for another hour, and then water (10 ml) was added. The colour faded instantly, and two almost clear layers formed. The organic layer was separated, dried (sodium sulfate) and after removal of the toluene *in vacuo* remained the product as a pale yellow oil, almost pure by ³¹P-NMR (CDCl₃, 121 MHz) δ -3.18, -4.18 (AB, J_{P,P}=156 Hz).

### Example 3: Preparation and ee-determination of diphenyl-phosphinic acid 1-phenyl-ethyl ester:

To a solution of (*R*)-1-phenylethanol (12.21g, 0.1 mol, 70% ee) in pyridine (15.8g, 0.2 mol) and dichloromethane (50 mL) was added dropwise within 10 minutes a solution of diphenylphosphonic acid chloride (23.6g, 0.1 mol) in dichloromethane (100 ml). After three hours startet the precipitation of pyridine hydrochloride, and the conversion was ca. 85% by ³¹P-NMR. The mixture was stirred at ambient temperature for another hour, and then the dichloromethane was removed on the rotavapor (50°C, 500 mbar). To the residue was added hydrochloric acid (50 ml 4N solution), and the product was extracted with ether. The organic layer was washed with water (twice ca. 100 ml), dried (Na₂SO₄), and removal of the solvent gave 29.2 g of an oil which was crystallised from di-isopropyl ether to give 17.41g crystals, mp. 81-81.5°C. The ee-determination of this material gave an ee of 92%. The melting point of the racemic compound is 73°C. Ee assay for the phosphonate: ChiralPack AD, n-hexane/ethanol 97:3, 18.92 min (*R*-ester) and 21.81 min (*S*-ester). ¹H/¹³C-NMR (CDCl₃, 300 MHz) δ / δ 1.66 (d, J = 6.4 Hz) / 25.40 (d, J = 3.1 Hz) (CH₃); 5.52 (dq, J = 9.1 Hz) / 74.84 (d, J = 5.7 Hz) (C*H*Me); 7.27 (m) / 126.10 (Ar ortho-CH); 7.26 (m) / 128.09 (Ar para-CH); 7.26 (m) /128.46 (d, J = 13.0 Hz) (Ph meta-CH); 7.26 (m) / 128.61 (Ar meta-CH); 7.41 (m) / 128.62 (d, J = 13.2 Hz) (Ph meta-CH); 7.82 (m) /131.68 (d, J = 10.0 Hz) (Ph ortho-CH); 131.79 (d, J = 134.5 Hz) (Ph ipso-C); 7.63 (m) / 132.03 (d, J = 10.3 Hz) (Ph ortho-CH); 7.42 (m) / 132.10, 132.20 (2 d, J = 2.9 Hz), (2 Ph para-CH); 132.71 (d, J = 139.3 Hz) (Ph ipso-C); 142.28 (d, J = 4.8 Hz) (Ar ipso-C). ³¹ P-NMR δ 31.72.

### Example 4: Preparation of diphenyl-(1-phenyl-ethyl)-phosphane and determination of the optical yield for this alkylation reaction

In a Schlenk flask under an atmosphere of nitrogen was added to a solution of diethylamine (0.185g, 2.53 mmol) in THF (2 ml) a solution of n-Buli (0.7 ml 1.6 N solution, 1.12 mmol), and after stirring for two minutes diphenyl-phosphine (0.186g, 1 mmol) which led to a change of the colour to yellow. Without delay was then a solution of diphenyl-phosphinic acid 1-phenyl-ethyl ester (0.322 g, 1 mmol) in THF (2 ml) added dropwise within ca. three minutes. The colour was fading, and after ca. half of the phosponate had been added, a precipitate formed. After stirring for another 10 minutes, sodium hydroxide (1.0 ml 40% solution), water (3 ml), and TBME (10 ml) was added. After stirring for five minutes two colourless layers had formed. Removal of the aqueous layer and evaporation of the TBME leaves diphenyl-(1-phenyl-ethyl)-phosphane as a solid. When racemic diphenyl-phosphinic acid 1-phenyl-ethyl ester was utilized in this preparation, the product was recrystallised from methanol (5ml), filtered off and dried to give 210 mg (71% yield). This material was converted into the phosphine oxide via oxidation with hydrogen peroxide and used to establish an ee-assay: Chiracel OD, n-hexane/ethanol 97:3, 14.76 min (*S*-oxide) and 16.803 min (*R*-oxide).
When diphenyl-phosphinic acid 1-phenyl-ethyl ester of an ee of 92% was used in the above reaction, the ee of the phosphine oxide was 87.85%, which means that the optical yield for the inversion is 95%.
Analytical data for diphenyl-(1-phenyl-ethyl)-phosphane: ¹H/¹³C-NMR (CDCl₃, 300MHz HSQC/HMBC) δ / δ 1.28 (dd, J = 7.0 Hz, J = 14.0 Hz) / 20.22 (d, J = 20.4 Hz) (CH₃); 3.41(dq, J = 7.0 Hz) / 39.58 (d, J = 12.5 Hz) (CHMe); 7.18 (m) / 126.35 (1 C, d, J = 2.3 Hz) (Ar para-CH); 7.17 (m) / 128.05 (2 C, d, J = 6.5 Hz) (Ar ortho-CH); 7.24 (m) / 128.46 (d, J = 0.6 Hz) (Ph para-CH); 7.24 (m) / 128.48 (d, J = 1.0 Hz) (Ar meta-CH); 7.22 (m) / 128.68 (d, J = 7.6 Hz) (Ph meta- CH); 7.46 (m) / 128.75 (d, J = 7.4 Hz) ) (Ph meta-CH); 7.46 (m) / 129.42 (d, J = 0.9 Hz) (Ph para- CH); 7.15 (m) / 133.32 (d, J = 17.9 Hz) (Ph ortho- CH); 7.69 (m) /134.33 (d, J = 20.8 Hz) (Ph ortho- CH); 137.12 (d, J = 16.1 Hz) (Ph ipso-C); 137.70 (d, J = 15.0 Hz) (Ph ipso- C); 143.64 (d, J = 8.8 Hz) (Ar ipso-C). ³¹P-NMR δ 3.73. Analytical data for diphenyl-(1-phenyl-ethyl)-phosphane oxide: ³¹P-NMR δ 37.89.

## Claims

1. A process for the preparation of a ligand of the formula I or II, 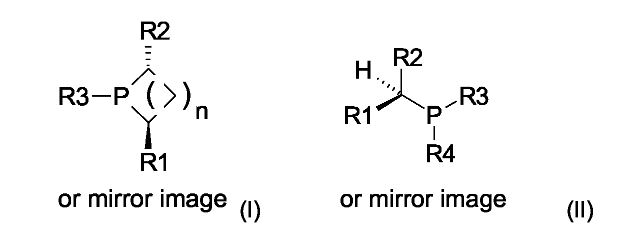 in high enantiomeric purity,
said process comprising reacting a compound of the formula III of high enantiopurity 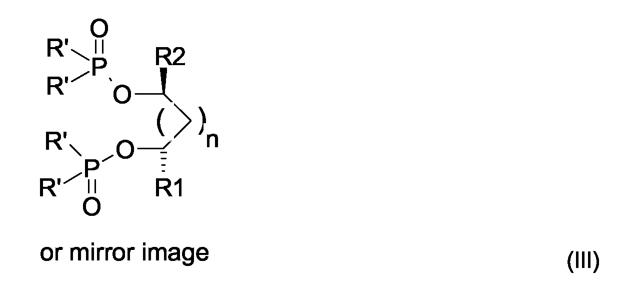 with a phosphine of the formula V
R3-PH₂ (V)
for the synthesis of a compound of the formula I;
or reacting a compound of the formula IV of high enantiopurity 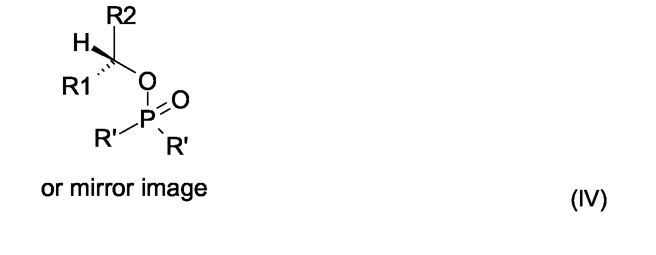 with a phosphine of the formula VI
R₃-PH-R₄ (VI)
for the synthesis of a compound of the formula II,
where
R₁ and R₂ independently are alkyl or aryl, especially C₁-C₄alkyl or phenyl;
n ranges from 1 to 5, especially from 1 to 3;
R₃, R₄, R' independently are monovalent organic moieties that can be bound stable to phosphorus, preferably selected from aryl or substituted aryl, especially *ortho* P- or heteroatom-substituted aryl, especially C₁-C₄-alkyl.

2. Process of claim 1 wherein R₃ and R₄ are equal, and the residues R' bonding to the same phosphorus atom are equal, and preferably are phenyl or form part of a P-containing ring, especially a five membered carbocyclic ring.

3. Process of claim 1 where in formulae II and IV R₁ is alkyl, preferably C₁-C₄-alkyl, and R₂ is alkyl or aryl, preferably C₁-C₄alkyl or phenyl; and in formulae I and III R₁ and R₂ are alkyl or aryl, preferably lower alkyl or phenyl, and also preferably R₁ is equal to R₂.

4. A ligand of the formula I or II, or a reagent of the formula III or IV as shown in claim 1,
wherein R₂ is aryl, preferably wherein each R' and R₂ are phenyl.

5. Process of claim 1 which is carried out in the presence of a base.

6. Process of claim 1 wherein the enantiomeric purity of the compounds of formulae I - IV is at least 90%.

7. A transition metal complex comprising a ligand of the formula I or II as shown and defined in claim 1.

8. A process of claim 1, wherein the reagents of the formula III or IV are previously prepared from the corresponding chiral mono- or dialcohol and a compound of the formula X
(R')₂-P(=O)-Hal (X),
in the presence of a base,
wherein Hal stands for halogen and R' is as defined in claim 1.

9. Use of a phosphinic acid ester derived from a chiral alcohol of high enantiopurity as thermally stable alkylating reagent.

10. The use of a phosphorus containing ligand according to any one of claims 1 or 4, or a transition metal complex according to claim 7, in an asymmetric reaction or as an asymmetric catalyst.
